# FASCICULE DE BREVET EUROPEEN

(11) **EP 2 032 440 B1**
(45) Date de publication et mention de la délivrance du brevet: **15.02.2012**
(21) Numéro de dépôt: 07803943.5
(22) Date de dépôt: 26.06.2007
(51) Int. Cl.: B64G 1/50

(54) **DISPOSITIF DE REGULATION THERMIQUE PASSIVE A BASE DE BOUCLE FLUIDE DIPHASIQUE A POMPAGE CAPILLAIRE AVEC CAPACITE THERMIQUE**
PASSIVES KAPILLARGEPUMPTES DIPHASISCHES FLÜSSIGKEITSKREIS-WÄRMESTEUERUNGSGERÄT MIT WÄRMELEISTUNG
CAPILLARY PUMPED DIPHASIC FLUID LOOP PASSIVE THERMAL CONTROL DEVICE WITH HEAT CAPACITY

(30) Priorité: 28.06.2006 FR 0605832
(43) Date de publication de la demande: 11.03.2009
(73) Titulaire: ASTRIUM SAS, 75016 Paris (FR)
(72) Inventeur: FIGUS, Christophe, 31280 Dremil Lafage (FR)
(74) Mandataire: Cabinet Plasseraud
(86) Numéro de dépôt international: PCT/FR2007/051526
(87) Numéro de publication internationale: WO 2008/001004

(56) Documents cités:
- FR-A1- 2 813 662
- US-A1- 2002 144 811
- US-B1- 6 631 755
- DATABASE WPI Week 199623 Derwent Publications Ltd., London, GB; AN 1996-228994 XP002422263 & RU 2 044 983 C1 (LAVOCHKIN RES PRODN ASSOC) 27 septembre 1995 (1995-09-27)
- MESTEMACHER F ET AL: "KAPILLARGEPUMPTE ZWEIPHASENKREISLAEUFE FUER RAUMFAHRTANWENDUNGEN" ZEITSCHRIFT FUR FLUGWISSENSCHAFTEN UND WELTRAUMFORSCHUNG, DFVLR. KOLN, DE, vol. 16, no. 5, 1 octobre 1992 (1992-10-01), pages 294-300, XP000321744 ISSN: 0342-068X

## Description

La présente invention concerne un dispositif de régulation thermique purement passif, basé sur au moins une boucle de transfert thermique à circulation de fluide utilisé pour le refroidissement de sources dissipatrices d'énergie thermique.

Par le document de brevet FR 2 813 662, il est connu un évaporateur capillaire pour boucle de transfert thermique, comprenant, dans un boîtier muni d'un tube d'entrée de liquide de transfert de chaleur et d'un tube de sortie de vapeur, une masse microporeuse séparant, dans le boîtier, un volume de collection de liquide en liaison avec le tube d'entrée et un volume d'évaporation communiquant avec le tube de sortie et fermé par une plaque métallique d'interface avec la source chaude à refroidir, le boîtier étant en un matériau à faible conductivité thermique et la masse microporeuse étant en matière plastique contenant éventuellement des charges en matériau à faible conductivité thermique. En outre, une rondelle métallique noyée dans le fond du boîtier entoure le débouché du tube d'entrée et est reliée à l'extérieur par un pion métallique. Ce document de brevet décrit également une boucle de transfert thermique comprenant un évaporateur tel que défini ci-dessus, et un condenseur, la boucle contenant un fluide de transfert thermique constitué par l'ammoniac, le méthanol ou l'eau.

Plus précisément, l'invention se rapporte à un dispositif de régulation thermique à circulation de fluide caloporteur en circuit fermé, apte à transférer de la chaleur d'au moins une source dite chaude à au moins une source dite froide, et comprenant au moins une boucle d'un fluide diphasique à pompage capillaire.

Selon l'état de la technique, une telle boucle, communément dénommée LHP (acronyme de l'expression anglo-saxonne Loop Heat Pipe) est une boucle à transfert thermique qui comporte un évaporateur, destiné à être mis en relation d'échange thermique avec au moins une source dite chaude, afin d'extraire de la chaleur de ladite source chaude, et qui est alimenté, au travers d'une masse microporeuse reliée à une réserve de fluide diphasique à l'état liquide, en fluide diphasique liquide destiné à être vaporisé dans l'évaporateur. Ce dernier est relié par une conduite de vapeur à un condenseur, destiné à être mis en relation d'échange thermique avec au moins une source dite froide, et ainsi destiné à restituer la chaleur extraite de la source chaude à ladite source froide, à laquelle de la chaleur est transmise par la condensation dans le condenseur de fluide en phase vapeur en fluide en phase liquide, qui est retourné à l'évaporateur par une conduite de liquide reliant le condenseur à l'évaporateur.

Ainsi, l'évaporateur et le condenseur sont reliés par une tuyauterie bouclée dans laquelle circule un fluide diphasique à l'état liquide, dans la partie froide de la boucle ou conduite de liquide, et à l'état gazeux dans sa partie chaude, ou conduite de vapeur.

Dans ce type de boucle, le pompage du fluide est assuré par capillarité (boucle capillaire), grâce à la masse microporeuse reliée à la réserve de fluide à l'état liquide et assurant le pompage de ce fluide liquide par capillarité dans l'évaporateur. Ainsi, le fluide liquide présent dans la réserve de l'évaporateur s'évapore au contact de la source chaude, et le gaz ainsi créé est évacué vers le condenseur, en relation d'échange thermique avec la source froide, et dans lequel le gaz se condense et revient à l'état liquide vers l'évaporateur pour créer un cycle de transfert de chaleur.

Dans une telle boucle, la capillarité est utilisée comme pression motrice, et le changement de phase liquide-vapeur est utilisé comme moyen de transport de l'énergie.

La réserve de fluide liquide, située à proximité de la source chaude, en général sur la face arrière de l'évaporateur, permet d'alimenter la boucle en liquide en fonction de la température ou de la puissance de fonctionnement.

Une limitation de ce type de boucle de transfert thermique à évaporateur capillaire provient du fait que, lorsque les conditions externes abaissent sensiblement la température de la source froide, ou la température de la source chaude, ou les deux températures à la fois, et cela sans que la température de la source chaude devienne inférieure à celle de la source froide, le fonctionnement d'une telle boucle selon l'état de la technique a pour effet, dans tous les cas, d'abaisser encore plus la température de la source chaude, éventuellement en dessous de sa plage de fonctionnement normal. Dans ce cas, et comme connu dans l'état de la technique, il est fait usage de réchauffeurs permettant de réguler la température de la source chaude ou de la source froide, de tels réchauffeurs étant le plus souvent installés au contact desdites sources ou sur la paroi d'un réservoir associé à l'évaporateur et contenant la réserve de fluide diphasique liquide. Cependant, l'utilisation de réchauffeurs a pour inconvénient de consommer de l'énergie électrique, toujours disponible en quantité limitée et à des coûts très élevés à bord de véhicules spatiaux, notamment de satellites. Eventuellement, de plus, l'utilisation de réchauffeurs nécessite un contrôle actif, à partir de capteurs de température, implantés notamment sur les sources précitées ou le réservoir précité, ainsi que d'une unité de commande des réchauffeurs et de traitement des signaux des capteurs de température, ce qui rend le dispositif de régulation thermique plus complexe et plus coûteux.

Le but visé par la présente invention est de pallier ces limitations, et de proposer un dispositif de régulation thermique à base de boucle fluide diphasique à pompage capillaire, du type présenté ci-dessus, qui satisfasse mieux que les dispositifs connus de l'état de la technique aux diverses exigences de la pratique, et, en particulier, qui apporte d'autres avantages, lesquels apparaîtront au cours de la description ci-dessous.

L'idée à la base de l'invention repose sur l'adjonction, à au moins une boucle telle que présentée ci-dessus, d'au moins une capacité thermique qui, en fonctionnement nominal du dispositif de régulation thermique, lorsque ladite boucle reçoit une puissance thermique à transporter, accumule de la chaleur grâce à un flux thermique transitant depuis la source chaude au travers du fluide diphasique à l'état liquide et présent dans ou au voisinage de l'évaporateur, alors que la boucle, en fonctionnement nominal, évacue la majeure partie de la puissance thermique qu'elle reçoit vers le condenseur et la source froide, et qui, lorsque la puissance thermique à dissiper diminue ou s'annule, ou que la température de la source froide diminue, restitue de l'énergie thermique à la boucle, de sorte qu'il est possible de contrôler, voire de stopper, le fonctionnement de ladite boucle, et cela de façon totalement passive.

A cet effet, l'invention propose un dispositif de régulation thermique du type présenté ci-dessus, comprenant au moins une boucle d'un fluide diphasique à pompage capillaire telle qu'également présentée ci-dessus, et qui se caractérise en ce qu'il comprend de plus au moins une capacité thermique, en relation d'échange thermique permanente avec du fluide en phase liquide de ladite au moins une boucle de fluide diphasique.

Ladite au moins une capacité thermique comprend au moins une masse d'au moins un matériau à changement de phase. Dans ce cas, en effet, le matériau à changement de phase présente, par absorption de la chaleur latente de changement de phase, une grande capacité de stockage thermique qui améliore la capacité de contrôle du dispositif de régulation thermique.

Au moins un matériau à changement de phase peut être également un fluide diphasique à changement de phase liquide-gaz, ce fluide diphasique pouvant être identique à celui de ladite au moins une boucle de fluide diphasique du dispositif de régulation, ou différent du fluide diphasique de cette boucle. Avantageusement cependant, au moins un matériau à changement de phase est à changement de phase solide-liquide, ce qui facilite la réalisation de la capacité thermique additionnelle et son intégration à l'évaporateur de la boucle de fluide diphasique, et ce qui offre également l'avantage de faciliter la sélection du ou des matériau(x) à changement de phase de la ou des capacité(s) thermique(s) additionnelles pour ajuster la plage de fonctionnement de la boucle de fluide diphasique correspondante et de la source chaude.

Un autre avantage est que le ou les matériau(x) à changement de phase de la ou des capacité(s) thermique(s) peuvent être sélectionnés de sorte que le dispositif de régulation fonctionne en interrupteur thermique, stoppant le fonctionnement de ladite au moins une boucle de fluide diphasique dans des conditions de température déterminées de la source froide et/ou de la source chaude.

Dans tous les cas, le dispositif de régulation thermique selon l'invention permet un transfert thermique entre la ou les capacités thermiques et la réserve de fluide liquide de ladite au moins une boucle de transfert à fluide diphasique, ladite au moins une capacité thermique étant en relation d'échange thermique principalement avec au moins une partie de la conduite de liquide de ladite au moins une boucle de fluide diphasique, ou, avantageusement, ladite au moins une capacité thermique étant en relation d'échange thermique principalement avec ladite réserve de fluide liquide de ladite au moins une boucle de fluide diphasique.

Ce transfert thermique entre la capacité thermique et la réserve de fluide liquide de la boucle de transfert, soit au niveau de l'évaporateur, soit au niveau de la tuyauterie de circulation du liquide, peut se faire de manière directe, par conduction, auquel cas il est avantageux que ladite au moins une capacité thermique soit en contact direct avec l'évaporateur de ladite au moins une boucle de fluide diphasique.

Mais ce transfert thermique peut également se faire de manière indirecte, de sorte que la capacité thermique soit déportée de la réserve de fluide liquide de l'évaporateur, auquel cas ladite capacité thermique est en relation d'échange thermique avec ledit évaporateur par au moins un caloduc et/ou au moins une boucle intermédiaire de transfert thermique.

Selon un exemple de réalisation avantageusement simple à mettre en oeuvre, ladite au moins une capacité thermique est fixée à ou dans un boîtier dudit évaporateur, qui loge ladite réserve de fluide liquide et ladite masse microporeuse de ladite au moins une boucle de fluide diphasique, et à proximité d'une entrée de fluide liquide, provenant de ladite conduite de liquide correspondante, dans ledit boîtier, du coté du boîtier qui est à l'opposé d'une face chaude dudit évaporateur, formant interface avec ladite source chaude ou boucle intermédiaire de transfert thermique ou avec ledit caloduc, et à proximité d'une sortie de fluide vapeur dans ladite conduite de vapeur correspondante.

Avantageusement dans ce cas, pour améliorer la coopération de l'évaporateur et de la masse microporeuse, au moins un ressort, de préférence hélicoïdal, prenant appui contre un fond dudit boîtier adjacent à ladite capacité thermique pour repousser ladite masse microporeuse vers ladite face chaude dudit évaporateur, est disposé dans ladite réserve de fluide liquide.

Pour faciliter la réalisation de la boucle fluide diphasique, ledit boîtier dudit évaporateur est avantageusement muni d'un tube d'entrée de fluide liquide provenant de ladite conduite de liquide et d'un tube de sortie de fluide vapeur vers ladite conduite de vapeur, et renferme ladite masse microporeuse séparant, dans ledit boîtier, un volume de réserve de fluide liquide, en communication avec ledit tube d'entrée, d'un volume d'évaporation en communication avec ledit tube de sortie, et fermé par ladite face chaude agencée en plaque thermiquement conductrice d'interface avec ladite source chaude à refroidir.

Ainsi, lors du fonctionnement de ladite au moins une boucle fluide diphasique du dispositif de régulation thermique selon l'invention, ladite au moins une capacité thermique associée va stocker une partie de l'énergie fournie par la source chaude, et cela au-delà d'une certaine température (de vaporisation ou de fusion) lorsqu'avantageusement un matériau à changement de phase (respectivement liquide-vapeur ou solide-liquide) fait office de capacité thermique. Dans le cas où la température de la source chaude s'abaisse, éventuellement en dessous d'un seuil de température (température de condensation ou température de solidification) si un matériau à changement de phase (respectivement liquide-gaz ou solide-liquide) fait office de capacité thermique, cette capacité thermique rétrocède tout ou partie de l'énergie thermique stockée à la réserve de fluide avec laquelle elle est en relation d'échange thermique. Un premier effet est de réchauffer ainsi le fluide diphasique liquide circulant dans la boucle ou contenu dans l'évaporateur de cette boucle. Un second effet est de diminuer, de façon totalement passive, la performance thermique de la boucle de transfert, qui est très sensible à la température de ce fluide à l'état liquide. En effet, une telle boucle de fluide diphasique transporte la quasi-totalité de l'énergie thermique par changement de phase du fluide, et requiert pour fonctionner quelques frigories pour maintenir à l'état liquide le fluide circulant du condenseur vers l'évaporateur. L'échauffement de ce liquide, selon l'invention, par au moins une capacité thermique additionnelle, permet de modifier très sensiblement la performance de transfert thermique de la boucle, laquelle fonctionne ainsi en régulateur thermique (performance thermique non nulle, faible transfert), voire en interrupteur thermique (performance thermique nulle, aucun transfert).

Le dispositif de régulation thermique selon l'invention est approprié à de nombreuses applications. En particulier, on peut citer des applications à bord d'engins spatiaux, lorsqu'un tel engin subit de grandes amplitudes thermiques dans sa plage de fonctionnement, par exemple entre des phases où il est éclairé directement par le soleil, et des phases d'éclipse où il n'est plus directement exposé au rayonnement solaire.

Sur ce type d'engin spatial, la puissance thermique des équipements dissipatifs embarqués, en particulier des équipements électroniques, est dissipée, comme connu de l'état de la technique, par rayonnement au moyen de radiateurs en contact avec l'espace froid, la taille de ces radiateurs étant définie par l'environnement thermique chaud de l'engin. En phase d'éclipse, pour les cas froids, et selon l'état de la technique, les radiateurs ou les équipements dissipatifs peuvent être réchauffés par l'intermédiaire de réchauffeurs.

L'invention a donc également pour objet l'application d'un dispositif de régulation thermique propre à l'invention, et tel que défini ci-dessus, à la régulation de température d'une source chaude, comprenant au moins un équipement dissipatif d'un vaisseau spatial, tel qu'un satellite, avec transfert thermique à une source froide qui est un puits de chaleur comprenant au moins un radiateur dudit vaisseau spatial.

D'autres caractéristiques et avantages de l'invention ressortiront de la description donnée ci-dessous, à titre non limitatif, d'un exemple de réalisation décrit en référence aux dessins annexés sur lesquels :

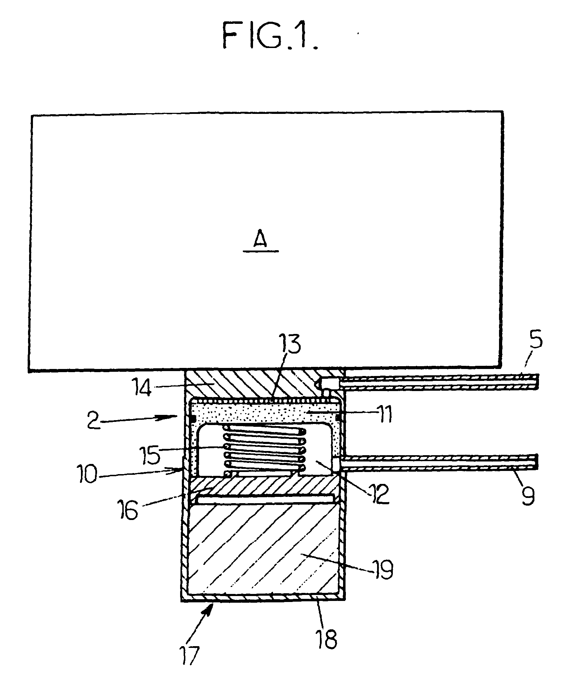

- la figure 1 est une vue partielle, en partie en coupe et en partie en élévation latérale, d'un dispositif de régulation thermique selon l'invention, dans la partie d'extrémité de sa boucle fluide diphasique à pompage capillaire qui comporte l'évaporateur et une capacité thermique propre à l'invention,

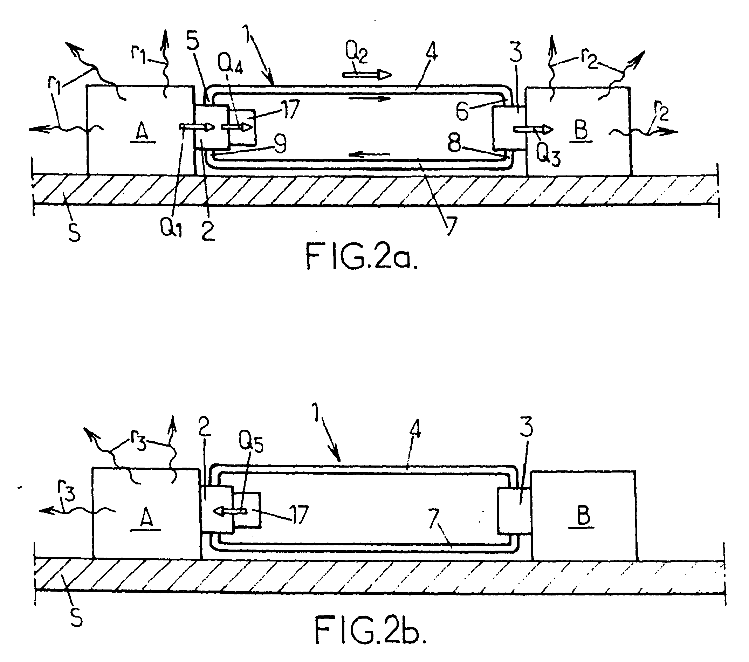

- la figure 2a est une vue schématique en élévation latérale du dispositif de régulation thermique partiellement représenté sur la figure 1, reliant une source chaude à une source froide, pour expliquer le principe de fonctionnement de la boucle fluide diphasique du dispositif, dans la configuration où la source chaude doit être refroidie, et
- la figure 2b est une vue analogue à la figure 2a pour expliquer le principe de fonctionnement de ladite boucle, lorsque cette dernière est à l'arrêt.

L'exemple de dispositif de régulation thermique (ou régulateur thermique) purement passif représenté sur les figures 1 à 2b comprend une unique boucle de fluide diphasique à pompage capillaire, désignée dans son ensemble par la référence 1, interposée en boucle de transfert thermique à circulation de fluide caloporteur entre une source dite chaude A à refroidir, par exemple un équipement électronique dissipatif de chaleur embarqué dans un satellite, et une source dite froide B, dans cet exemple un radiateur supporté sur une face externe du satellite, dont la structure porteuse est repérée schématiquement en S.

La boucle 1 comporte essentiellement, à ses deux extrémités, un évaporateur désigné dans son ensemble par la référence 2, qui extrait de la chaleur de l'équipement dissipatif A en fonctionnement, et un condenseur 3 qui restitue cette chaleur au radiateur B. La boucle 1 comprend également une première conduite fluidique 4 reliant la sortie 5 de l'évaporateur 2 à l'entrée 6 du condenseur 3, et par laquelle l'évaporateur 2 alimente le condenseur 3 en fluide diphasique (par exemple de l'ammoniac de formule NH3 ) en phase vapeur, raison pour laquelle la conduite 4 est dénommée conduite de vapeur, et une seconde conduite fluidique 7 reliant la sortie 8 du condenseur 3 à l'entrée 9 de l'évaporateur 2, et par laquelle le condenseur 3 alimente l'évaporateur 2 en fluide diphasique en phase liquide, raison pour laquelle cette conduite 7 est dénommée conduite de liquide.

L'évaporateur 2 est apte à absorber de la chaleur extraite de l'équipement dissipatif A par évaporation du fluide diphasique circulant dans la boucle 1, le fluide gazeux sortant de l'évaporateur 2 étant transféré par la conduite de vapeur 4 au condenseur 3, apte à restituer et évacuer la chaleur vers le radiateur B par condensation du fluide vaporisé, le fluide à l'état liquide retournant alors par la conduite de liquide 7 dans l'évaporateur 2, de sorte à former ainsi une boucle fluide de transfert de chaleur.

Comme représenté sur la figure 1, l'évaporateur 2 comprend un boîtier 10 métallique, muni d'un tube d'entrée 9 du fluide liquide provenant de la conduite de liquide 7, et d'un tube de sortie 5 de fluide vapeur vers la conduite de vapeur 4, et le boîtier 10 renferme une masse microporeuse 11 qui sépare, à l'intérieur du boîtier 10, un volume de réserve 12 de fluide liquide dans lequel débouche le tube d'entrée 9, d'un volume d'évaporation 13, qui communique avec le tube de sortie 5, et qui est fermé, du côté opposé à la masse microporeuse 11, par une face chaude 14 de l'évaporateur 2, cette face chaude étant maintenue à faible distance de la masse 11 par une structure en grille formant entretoise, et étant constituée par une plaque épaisse thermiquement conductrice fermant le boîtier 10 à une extrémité et constituant une plaque d'interface avec l'équipement dissipatif A à refroidir en fonctionnement, et par laquelle plaque 14 l'évaporateur 2 est fixé appliqué contre cet équipement A.

La masse microporeuse 11 assure ainsi le pompage par capillarité du fluide liquide de la réserve 12 vers le volume d'évaporation 13, dans lequel le fluide liquide ainsi pompé est vaporisé par la chaleur extraite de l'équipement dissipatif A par la face chaude 14, et le fluide vaporisé s'échappe par le tube de sortie 5 vers la conduite de vapeur 4 et le condenseur 3, où il se condense et revient par la conduite de liquide 7 vers l'évaporateur 2 pour créer un cycle de transfert de chaleur.

Pour favoriser le pompage capillaire assuré par la masse microporeuse 11, cette dernière est élastiquement repoussée dans le boîtier 10 vers la plaque conductrice de la face chaude 14 par un ressort 15, par exemple hélicoïdal, disposé dans le volume de réserve 12 de fluide liquide, et appliqué par une extrémité contre la masse microporeuse 11 en prenant appui, par son autre extrémité, contre un fond 16 fermant la réserve 12 de fluide liquide et réalisé en un métal ou alliage métallique bon conducteur de la chaleur.

Selon l'invention, une capacité thermique 17 est associée à la boucle 1 de sorte à être en relation permanente d'échange thermique avec le fluide liquide de la réserve 12.

Ceci est avantageusement obtenu, comme représenté sur la figure 1, en fixant la capacité thermique 17 en contact direct avec l'évaporateur 2, de sorte que la relation d'échange thermique entre le fluide liquide de la réserve 12 et la capacité thermique 17 s'effectue par conduction.

Mais, en variante, la capacité thermique 17 peut être déportée par rapport à l'évaporateur 2, auquel cas la capacité thermique 17 peut être fixée en relation permanente d'échange thermique avec une partie de la conduite de liquide 7, et de préférence avec le tube d'entrée 9, qui contient du fluide à l'état liquide, ou encore couplée thermiquement à l'évaporateur 2 par au moins un caloduc ou au moins une boucle intermédiaire de transfert thermique.

La capacité thermique 17 peut être constituée par une masse d'inertie thermique importante (bloc métallique de bonne conductibilité thermique) fixée par exemple au fond 16 de la réserve 12 de fluide liquide, ou montée dans le boîtier 10 de l'évaporateur 2.

Selon l'invention, la capacité thermique 17 comprend un réservoir 18, qui se fixe sous le fond 16 et/ou au boîtier 10, dans le prolongement de ce dernier, de l'évaporateur 2, et contient une masse d'un matériau à changement de phase 19, qui peut être un fluide diphasique analogue, voire identique, à celui de la boucle 1, mais qui est de préférence un matériau 19 à changement de phase solide-liquide. Les transferts thermiques entre la capacité thermique 17 et la réserve 12 de fluide liquide sont ainsi permis directement par conduction au travers du fond 16 et du boîtier 10.

De manière inévitable, il existe un lien thermique parasite, mais faible, entre la source chaude A (équipement dissipatif) et la capacité thermique 17.

En disposant un matériau 19 à changement de phase (soit solide-liquide, par l'utilisation d'une paraffine par exemple, soit à changement de phase liquide-gaz), en tant que capacité de stockage thermique par absorption de la chaleur latente de changement de phase, au niveau de la face arrière de l'évaporateur 2, c'est-à-dire de l'autre côté du fond 16 du boîtier 10 par rapport à la réserve 12 de fluide liquide , il est possible d'utiliser cette capacité thermique 17 pour modifier la performance lorsque la boucle 1 dissipe une puissance, comme représenté sur la figure 2a. Dans ce cas, l'équipement dissipatif A rayonne de la chaleur (rayonnement r1), et transfère un flux de chaleur principal Q1 à l'évaporateur 2, d'où un flux de chaleur Q2 est transféré par le fluide vaporisé par l'évaporateur 2 et circulant dans la conduite de vapeur 4 au condenseur 3, transférant un flux de chaleur Q3 au radiateur B, qui rayonne cette chaleur vers l'espace froid (rayonnement r₂), tandis qu'un flux de chaleur Q4 est transféré par la réserve 12 de fluide liquide de l'évaporateur 2 à la capacité thermique 17. Ainsi, en fonctionnement nominal, lorsque la boucle 1 reçoit une puissance thermique à transporter au condenseur 3, le matériau 19 à changement de phase accumule de la chaleur, par liquéfaction ou vaporisation du matériau, en raison du flux de chaleur Q4 qui transite au travers de l'évaporateur 2, tandis que la boucle 1, qui fonctionne nominalement, évacue la majeure partie de la puissance thermique par le flux Q2 vers l'évaporateur 3 et la source froide B.

Par contre, si la boucle 1 fonctionne non plus en puissance transportée, comme décrit précédemment en référence à la figure 2a, mais en gradient de température (voir figure 2b), c'est-à-dire lorsque la puissance thermique à dissiper par l'équipement A diminue jusqu'à s'annuler, ou que la température de la source froide B baisse, des essais ont montré qu'il suffit de maintenir la réserve 12 de fluide liquide de l'évaporateur 2 plus chaude que la face chaude 14 de cet évaporateur 2, afin d'annihiler complètement le fonctionnement de la boucle 1. Ceci est obtenu par le fait que le matériau 19 à changement de phase restitue de l'énergie thermique par le flux Q5 à la réserve 12 de fluide liquide de l'évaporateur 2, par condensation ou solidification du matériau 19 à changement de phase, de sorte que par ce moyen, il est possible de contrôler et même d'arrêter le fonctionnement de la boucle 1 de fluide diphasique à pompage capillaire, de façon complètement passive.

Dans ce cas, aucun flux thermique n'est transporté par la boucle 1, et l'évaporateur 2 réchauffe l'équipement A qui rayonne vers l'intérieur du satellite (rayonnement r₃).

On créé ainsi un interrupteur thermique avec un dimensionnement approprié de la capacité thermique 17 (par ajustement de la masse (et de la nature) du matériau 19 à changement de phase) et il est ainsi possible de réguler/contrôler la boucle 1 sur une très longue période, d'autant plus que l'accumulation de chaleur du matériau 19 à changement de phase d'une capacité thermique 17 montée directement sur la réserve 12 de fluide liquide d'une boucle 1 est beaucoup plus rapide que sa restitution d'énergie thermique.

Pour redémarrer la boucle 1, il suffit soit de remettre l'équipement dissipatif A en fonctionnement, de sorte que de la puissance thermique soit à nouveau à dissiper, soit que la température de la source froide B remonte.

L'utilisation d'une boucle 1 de transfert capillaire dont l'évaporateur 2 est équipé d'une capacité thermique 17 basée sur l'utilisation d'un matériau 19 à changement de phase suivant l'invention permet, d'une part, de transférer efficacement de l'énergie thermique de l'équipement A vers le radiateur B lorsque la température de l'équipement A est supérieure à la température de fusion du matériau 19, dans le cas d'un matériau 19 à changement de phase solide-liquide, et ce tout en réchauffant également la capacité thermique 17 par le biais du flux thermique parasite transitant au travers de l'évaporateur 2. Lorsque la température de l'équipement A s'abaisse en dessous d'un certain seuil, défini par la température de solidification du matériau 19 à changement de phase, la capacité thermique 17 restitue de la chaleur à la réserve liquide 12 de la boucle capillaire 1, ce qui a pour effet de réchauffer le liquide froid provenant du condenseur 3, et de diminuer la performance thermique de la boucle 1 de transfert, de sorte que l'équipement A sera maintenu passivement dans une plage de température restreinte en empêchant un transfert efficace de chaleur de l'équipement A vers le radiateur B pendant cette phase.

On peut citer également l'application du dispositif à la régulation passive de température d'un équipement A dont la dissipation thermique est variable (la source froide B étant à une température supposée à peu près constante). Dans ce cas, l'utilisation du dispositif suivant l'invention permet de la même façon de réduire sensiblement la plage de variation de température de l'équipement A et ce de façon totalement passive. En effet, dans ce cas, la capacité thermique 17 absorbe une partie de l'excédant d'énergie à forte puissance, permettant ainsi un très bon transfert thermique avec la source froide B (couplage fort) et restitue cette énergie au liquide circulant vers l'évaporateur 2 à basse puissance, permettant un faible transfert thermique vers le condenseur 3, et donc le radiateur B, à faible puissance (couplage faible).

Dans un cas d'application très général, le dispositif suivant l'invention est appliqué à un système soumis à des contraintes de fonctionnement et d'environnement telles que, dans le même temps, la dissipation de la source chaude A et le flux thermique externe reçu par la source froide B varient. Dans tous les cas, l'utilisation du dispositif suivant l'invention permet de limiter passivement les excursions en température de la source chaude A, en filtrant les perturbations thermiques de chacune des extrémités de la boucle de transfert, au niveau de l'évaporateur 2 et du condenseur 3.

Dans tous ces exemples d'application, il est à noter que la régulation thermique s'effectue de façon entièrement passive, sans utilisation de thermistance, thermostat, réchauffeur, moyen d'acquisition et de traitement de données, ou de tout type de système de contrôle thermique actif ou semi-actif utilisant un ou plusieurs de ces éléments.

De façon générale, il est possible de modifier le comportement de ce régulateur thermique, en isolant thermiquement plus ou moins la capacité thermique 17 de l'environnement et de la boucle 1 de transfert, ou dans le choix du matériau 19 à changement de phase. Le régulateur peut ainsi être réglé en fonction de la plage de température d'utilisation.

## Revendications

1. Dispositif de régulation thermique à circulation de fluide caloporteur en circuit fermé, apte à transférer de la chaleur d' au moins une source dite chaude (A) à au moins une source dite froide (B), et comprenant au moins une boucle (1) d'un fluide diphasique à pompage capillaire, qui comporte un évaporateur (2), destiné à être mis en relation d'échange thermique avec ladite au moins une dite source chaude (A), et alimenté, au travers d'une masse microporeuse (11) reliée à une réserve (12) de fluide diphasique à l'état liquide, en fluide diphasique liquide destiné à être vaporisé dans l'évaporateur (2), relié par une conduite de vapeur (4) à un condenseur (3), destiné à être mis en relation d'échange thermique avec ladite au moins une source dite froide (B), à laquelle de la chaleur est transmise par la condensation dans le condenseur (3) de fluide en phase vapeur en fluide en phase liquide, qui est retourné à l'évaporateur (2) par une conduite de liquide (7) reliant le condenseur (3) à l'évaporateur (2), le dispositif comprenant de plus au moins une capacité thermique (17), en relation d'échange thermique permanente avec du fluide en phase liquide de ladite au moins une boucle (1) de fluide diphasique, **caractérisé en ce que** ladite au moins une capacité thermique (17) comprend au moins une masse d'au moins un matériau à changement de phase (19); lorsque la température de la source chaude (A) est abaissée en dessous d'un seuil de température de changement de phase, la capacité thermique (17) est propre à restituer de la chaleur à ladite réserve de fluide (12) de la boucle (1).

2. Dispositif de régulation thermique selon la revendication 1, **caractérisé en ce qu'**au moins un matériau à changement de phase (19) est également un fluide diphasique à changement de phase liquide-gaz, identique à celui de ladite au moins une boucle (1) de fluide diphasique ou différent du fluide diphasique de ladite boucle (1)

3. Dispositif de régulation thermique selon l'une quelconque des revendications 1 et 2, **caractérisé en ce qu'**au moins un matériau à changement de phase (19) est à changement de phase solide-liquide.

4. Dispositif de régulation thermique selon l'une quelconque des revendications 1 à 3, **caractérisé en ce que** ledit matériau à changement de phase (19) est sélectionné pour ajuster la plage de fonctionnement de ladite au moins une boucle (11) de fluide diphasique et de ladite source dite chaude (A).

5. Dispositif de régulation thermique selon l'une quelconque des revendications 1 à 4, **caractérisé en ce que** le matériau à changement de phase (19) est sélectionné de sorte que le dispositif de régulation fonctionne en interrupteur thermique, stoppant le fonctionnement de ladite au moins une boucle (1) de fluide diphasique dans des conditions de température déterminées de la source dite froide (B) et/ou de la source dite chaude (A).

6. Dispositif de régulation thermique selon l'une quelconque des revendications 1 à 5, **caractérisé en ce que** ladite au moins une capacité thermique (17) est en relation d'échange thermique principalement avec au moins une partie de la conduite de liquide (7) de ladite au moins une boucle (1) de fluide diphasique.

7. Dispositif de régulation thermique selon l'une quelconque des revendications 1 à 5, **caractérisé en ce que** ladite au moins une capacité thermique (17) est en relation d'échange thermique principalement avec ladite réserve (12) de fluide liquide de ladite au moins une boucle (1) de fluide diphasique.

8. Dispositif de régulation thermique selon la revendication 7, **caractérisé en ce que** ladite au moins une capacité thermique (17) est en contact direct avec 1' évaporateur (2) de ladite au moins une boucle (1) de fluide diphasique.

9. Dispositif de régulation thermique selon la revendication 7, **caractérisé en ce que** ladite au moins une capacité thermique (17) est déportée par rapport à 1' évaporateur (2) de ladite au moins une boucle (1) de fluide diphasique, et en relation d'échange thermique avec ledit évaporateur (2) par au moins un caloduc et/ou une boucle intermédiaire de transfert thermique.

10. Dispositif de régulation thermique selon l'une quelconque des revendications 1 à 9, **caractérisé en ce que** ladite au moins une capacité thermique (17) est fixée à ou dans un boîtier (10) dudit évaporateur (2), qui loge ladite réserve (12) de fluide liquide et ladite masse microporeuse (11) de ladite au moins une boucle de fluide diphasique, et à proximité d'une entrée (9) de fluide liquide, provenant de ladite conduite de liquide (7) correspondante, dans ledit boîtier (10), du coté du boîtier (10) qui est à l'opposé d'une face chaude (14) dudit évaporateur (2), formant interface avec ladite source dite chaude (A) ou boucle intermédiaire de transfert thermique ou avec ledit caloduc, et à proximité d'une sortie (5) de fluide vapeur dans ladite conduite de vapeur (4) correspondante.

11. Dispositif de régulation thermique selon la revendication 10, **caractérisé en ce qu'**au moins un ressort (15), par exemple hélicoïdal, prenant appui contre un fond (16) dudit boîtier (10) adjacent à ladite capacité thermique (17) pour repousser ladite masse microporeuse (11) vers ladite face chaude (14) dudit évaporateur (2), est disposé dans ladite réserve (12) de fluide liquide.

12. Dispositif de régulation thermique selon l'une des revendications 10 et 11, **caractérisé en ce que** ledit boîtier (10) dudit évaporateur (2) est muni d'un tube d'entrée (9) de fluide liquide provenant de ladite conduite de liquide (7) et d'un tube de sortie (5) de fluide vapeur vers ladite conduite de vapeur (4), et renferme ladite masse microporeuse (11) séparant, dans ledit boîtier (10), un volume de réserve (12) de fluide liquide, en communication avec ledit tube d'entrée (9), d'un volume d' évaporation (13) en communication avec ledit tube de sortie (5), et fermé par ladite face chaude (A) agencée en plaque thermiquement conductrice d' interface avec ladite source dite chaude (A) à refroidir.

13. Utilisation d'un dispositif de régulation thermique selon l'une des revendications 1 à 12 à la régulation de température d'une source dite chaude (A) comprenant au moins un équipement dissipatif d'un vaisseau spatial, tel qu'un satellite (S), avec transfert thermique à une source dite froide (8) qui est un puits de chaleur comprenant au moins un radiateur dudit vaisseau spatial.

## Claims

1. A closed circuit fluid coolant circulation thermal control device, capable of transferring heat from at least one so-called hot source (A) to at least one so-called cold source (B), and comprising at least one capillary pumped diphasic fluid loop (1), which comprises an evaporator (2), intended to be placed in heat exchange relationship with said at least one so-called hot source (A) and supplied, through a microporous mass (11), connected to a liquid state diphasic fluid reserve (12), with liquid diphasic fluid intended to be vaporized in the evaporator (2), connected by a vapour pipe (4) to a condenser (3), intended to be placed in heat exchange relationship with said at least one so-called cold source (B), to which heat is transmitted by the condensation in the condenser (3) of vapour phase fluid into liquid phase fluid, which is returned to the evaporator (2) by a liquid pipe (7) connecting the condenser (3) to the evaporator (2), the device further comprising at least one thermal capacitor (17), in permanent heat exchange relationship with liquid phase fluid in said at least one diphasic fluid loop (1) **characterized in that** said at least one thermal capacitor (17) comprises at least one mass of at least one phase change material (19) ; when the temperature of the hot source (A) is cooled below a phase changing temperature level, the thermal capacitor is capable of restituting heat to the said fluid reserve (12) of the loop.

2. Thermal control device according to claims 1, **characterized in that** said at least one phase change material (19) is also a liquid-gas phase change diphasic fluid, identical to the fluid in said at least one diphasic fluid loop (1) or different from the diphasic fluid in said loop (1).

3. Thermal control device according to any one of claims 1 and 2, **characterized in that** wherein said at least one phase change material (19) is a solid-liquid phase change material.

4. Thermal control device according to any one of claims 1 to 3,-**characterized in that** wherein said at least one phase change material (19) is selected to adjust the operating range of said at least one diphasic fluid loop (1) and said so-called hot source (A).

5. Thermal control device according to any one of claims 1 to 4, **characterized in that** the phase change material (19) is selected so that the control device operates as a thermal switch, stopping the operation of said at least one diphasic fluid loop (1) under given temperature conditions of the so-called cold source (B) and/or the so-called hot source (A).

6. Thermal control device according to any one of claims 1 to 5,-**characterized in that** said at least one thermal capacitor (17) is in heat exchange relationship principally with at least a part of the said liquid pipe (7) of said at least one diphasic fluid loop (1).

7. Thermal control device according to any one of claims 1 to 5,-**characterized in that** said at least one thermal capacitor (17) is in heat exchange relationship principally with said liquid fluid reserve (12) of said at least one diphasic fluid loop (1).

8. Thermal control device according to claim 7, **characterized in that** said at least one thermal capacitor (17) is in direct contact with the evaporator (2) of said at least one diphasic fluid loop (1).

9. Thermal control device according to claim 7, **characterized in that** said at least one thermal capacitor (17) is remote relative to the evaporator (2) of said at least one diphasic fluid loop (1), and in heat exchange relationship with said evaporator (2) by means of at least one heat pipe and/or at least one intermediate heat transfer loop.

10. Thermal control device according to any one of claims 1 to 9,-**characterized in that** said at least one thermal capacitor (17) is fixed to or in a housing (10) of said evaporator (2), which contains said liquid fluid reserve (12) and said microporous mass (11) of said at least one diphasic fluid loop, and close to a liquid fluid intake (9), originating from said corresponding liquid pipe (7), in said housing (10), on the side of the said housing (10) opposite a hot face (14) of said evaporator (2), forming an interface with said hot source (A) or intermediate heat transfer loop or with said heat pipe, and close to a vapour fluid outlet (5) into said corresponding vapour pipe (4).

11. Thermal control device according to claim 10, **characterized in that** at least one spring (15), for example helical, pushing against a base (16) of said housing (10) adjacent to said thermal capacitor (17) to push back said microporous mass (11) towards the said hot face (14) of said evaporator (2), is arranged in said liquid fluid reserve (12).

12. Thermal control device according to one of claim 10 and 11,-**characterized in that** said housing (10) of said evaporator (2) is equipped with a liquid fluid intake tube (9) originating from said liquid pipe (7) and a vapour fluid outlet tube (5) to said vapour pipe (4), and contains said microporous mass (11) separating, in said housing (10), a fluid liquid reserve space (12), which communicates with said intake tube (9), from an evaporation space (13), which communicates with said outlet tube (5), and which is enclosed by said hot face (A) arranged as a heat conducting interface plate with said hot source (A) to be cooled.

13. Use of a thermal control device according to one of claims 1 to 12 for the temperature control of a so-called hot source (A) comprising at least one piece of dissipating equipment on a spaceship, such as a satellite (S), with heat transfer to a so-called cold source (B) that is a heat sink comprising at least one radiator of said spaceship.

## Patentansprüche

1. Vorrichtung zur thermischen Steuerung/Regelung mit Zirkulation eines Wärmeträger-Fluids im geschlossenen Kreislauf, dazu geeignet, Wärme von wenigstens einer als warm bezeichneten Quelle (A) zu wenigstens einer als kalt bezeichneten Quelle (B) zu transferieren, und umfassend wenigstens eine Schleife (1) eines zweiphasigen Fluids mit Kapillarpumpe, welche einen Verdampfer (2) umfasst, der dazu bestimmt ist, in eine Wärmeaustausch-Beziehung mit der wenigstens einen als warm bezeichneten Quelle (A) gesetzt zu werden, und der vermittels einer mikroporösen Masse (11), die mit einem Vorrat (12) für das zweiphasige Fluid im flüssigen Zustand verbunden ist, mit flüssigem zweiphasigen Fluid versorgt wird, welches dazu bestimmt ist, im Verdampfer (2) verdampft zu werden, der durch eine Dampfleitung (4) mit einem Kondensator (3) verbunden ist, der dazu bestimmt ist, in eine Wärmeaustausch-Beziehung zu der wenigstens einen als kalt bezeichneten Quelle (B) gesetzt zu werden, zu welcher Wärme übertragen wird durch die Kondensation im Kondensator (3) des Fluids in der Dampfphase zum Fluid in der flüssigen Phase, welches zu dem Verdampfer (2) durch eine Flüssigkeitsleitung (7) zurückgeführt wird, welche den Kondensator (3) mit dem Verdampfer (2) verbindet, wobei die Vorrichtung weiterhin wenigstens eine thermische Kapazität (17) umfasst, in ständiger Wärmeaustausch-Beziehung mit Fluid in der flüssigen Phase von der wenigstens einen Schleife (1) des zweiphasigen Fluids, **dadurch gekennzeichnet, dass** die wenigstens eine thermische Kapazität (17) wenigstens eine Masse aus wenigstens einem Material mit Phasenübergang (19) umfasst, wobei, wenn die Temperatur der warmen Quelle (A) unterhalb eine Temperaturschwelle für den Phasenübergang gesenkt wird, die thermische Kapazität (17) geeignet ist, dem Vorrat an Fluid (12) der Schleife (1) Wärme wieder zuzuführen.

2. Vorrichtung zur thermischen Steuerung/Regelung nach Anspruch 1, **dadurch gekennzeichnet, dass** wenigstens ein Material mit Phasenübergang (19) ebenfalls ein zweiphasiges Fluid mit Phasenübergang flüssig-gasförmig ist, identisch zu dem von der wenigstens einen Schleife (1) des zweiphasigen Fluids oder unterschiedlich von dem zweiphasigen Fluid der Schleife (1).

3. Vorrichtung zur thermischen Steuerung/Regelung nach einem der Ansprüche 1 und 2, **dadurch gekennzeichnet, dass** wenigstens ein Material mit Phasenübergang (19) eines mit Phasenübergang festflüssig ist.

4. Vorrichtung zur thermischen Steuerung/Regelung nach einem der Ansprüche 1 bis 3, **dadurch gekennzeichnet, dass** das Material mit Phasenübergang (19) ausgewählt ist, um den Funktionsbereich von der wenigstens einen Schleife (11) des zweiphasigen Fluids und der als warm bezeichneten Quelle (A) einzustellen.

5. Vorrichtung zur thermischen Steuerung/Regelung nach einem der Ansprüche 1 bis 4, **dadurch gekennzeichnet, dass** das Material mit Phasenübergang (19) derart ausgewählt ist, dass die Steuer/Regelvorrichtung als thermischer Unterbrecher wirkt, welcher das Funktionieren von der wenigstens einen Schleife (1) des zweiphasigen Fluids unter bestimmten Temperaturbedingungen der als kalt bezeichneten Quelle (B) oder/und der als warm bezeichneten Quelle (A) stoppt.

6. Vorrichtung zur thermischen Steuerung/Regelung nach einem der Ansprüche 1 bis 5, **dadurch gekennzeichnet, dass** die wenigstens eine thermische Kapazität (17) hauptsächlich mit wenigstens einem Teil der Flüssigkeitsleitung (7) von der wenigstens einen Schleife (1) des zweiphasigen Fluids in Wärmeaustausch-Beziehung steht.

7. Vorrichtung zur thermischen Steuerung/Regelung nach einem der Ansprüche 1 bis 5, **dadurch gekennzeichnet, dass** die wenigstens eine thermische Kapazität (17) im wesentlichen mit dem Vorrat (12) des flüssigen Fluids von der wenigstens einen Schleife (1) des zweiphasigen Fluids in Wärmeaustausch-Beziehung steht.

8. Vorrichtung zur thermischen Steuerung/Regelung nach Anspruch 7, **dadurch gekennzeichnet dass** die wenigstens eine thermische Kapazität (17) in direktem Kontakt mit dem Verdampfer (2) von der wenigstens einen Schleife (1) des zweiphasigen Fluids steht.

9. Vorrichtung zur thermischen Steuerung/Regelung nach Anspruch 7, **dadurch gekennzeichnet, dass** die wenigstens eine thermische Kapazität (17) in Bezug auf den Verdampfer (2) von der wenigstens einen Schleife (1) des zweiphasigen Fluids versetzt ist, und in Wärmeaustausch-Beziehung mit dem Verdampfer (2) durch wenigstens ein Wärmerohr oder/und eine Zwischen-Schleife für thermischen Transfer steht.

10. Vorrichtung zur thermischen Steuerung/Regelung nach einem der Ansprüche 1 bis 9, **dadurch gekennzeichnet, dass** die wenigstens eine thermische Kapazität (17) an oder in einem Gehäuse (10) des Verdampfers (2) fixiert ist, das den Vorrat (12) an flüssigem Fluid und die mikroporöse Masse (11) von der wenigstens einen Schleife des zweiphasigen Fluids beherbergt, und in der Nähe von einem Einlass (9) des flüssigen Fluids, welches von der entsprechenden Flüssigkeitsleitung (7) stammt, in das Gehäuse (10), auf der Seite des Gehäuses (10), die einer warmen Seite (14) des Verdampfers (2) gegenüber liegt, die eine Kontaktstelle mit der als warm bezeichneten Quelle (A) oder der Zwischen-Schleife für den thermischen Transfer oder mit dem Wärmerohr bildet, und in der Nähe zu einem Auslass (5) des dampfförmigen Fluids in die entsprechende Dampfleitung (4).

11. Vorrichtung zur thermischen Steuerung/Regelung nach Anspruch 10, **dadurch gekennzeichnet, dass** wenigstens eine Feder (15), zum Beispiel eine Schraubenfeder, die sich gegen einen Boden (16) des Gehäuses (10) abstürzt, benachbart zu der thermischen Kapazität (17), um die mikroporöse Masse (11) zu der warmen Seite (14) des Verdampfers (2) zurück zu drücken, in dem Vorrat (12) für flüssiges Fluid angeordnet ist.

12. Vorrichtung zur thermischen Steuerung/Regelung nach einem der Ansprüche 10 und 11, **dadurch gekennzeichnet, dass** das Gehäuse (10) des Verdampfers (2) mit einem Eingangsrohr (9) für flüssiges Fluid ausgestattet ist, welches von der Flüssigkeitsleitung (7) kommt, und mit einem Ausgangsrohr (5) für dampfförmiges Fluid zu der Dampfleitung (4) hin, und die mikroporöse Masse (11) einschließt, welche in dem Gehäuse (10) ein Volumen eines Vorrats (12) für flüssiges Fluid in Verbindung mit dem Einlassrohr (9) von einem Verdampfungsvolumen (13) trennt, das in Verbindung zu dem Ausgangsrohr (5) steht und von der warmen Seite (A) geschlossen wird, die als wärmeleitende Kontaktstellen-Platte mit der abzukühlenden, als warm bezeichneten Quelle (A) angeordnet ist.

13. Verwendung einer Vorrichtung zur thermischen Steuerung/Regelung nach einem der Ansprüche 1 bis 12 zur Steuerung/Regelung einer als warm bezeichneten Quelle (A), welche wenigstens eine dissipative Einrichtung eines Weltraumfahrzeugs umfasst, wie beispielsweise einen Satelliten (S), mit Wärmeübertragung auf eine als kalt bezeichnete Quelle (8), die eine Wärmesenke ist, welche wenigstens einen Radiator von dem Weltraumfahrzeug umfasst.
